Europäisches Patentamt

European Patent Office

Office européen des brevets

(19)

(11) Publication number: **0 144 146**
**A2**

(12) **EUROPEAN PATENT APPLICATION**

(21) Application number: **84307389.1**

(22) Date of filing: **26.10.84**

(51) Int. Cl.⁴: **H 01 R 13/52**
**H 01 B 7/18**

(30) Priority: **01.11.83 ZA 838147**

(43) Date of publication of application:
**12.06.85 Bulletin 85/24**

(84) Designated Contracting States:
**AT BE CH DE FR GB IT LI LU NL SE**

(71) Applicant: **Duarte, John Sardinha**
**4 Grassmere Road Albemarle**
**Germiston Transvaal Province(ZA)**

(72) Inventor: **Duarte, John Sardinha**
**4 Grassmere Road Albemarle**
**Germiston Transvaal Province(ZA)**

(74) Representative: **Rooney, Paul Blaise et al,**
**D.Young & Co. 10 Staple Inn**
**London WC1V 7RD(GB)**

(54) **Cable gland.**

(57) This invention relates to armoured cable glands having an armour clamp comprising an armour spreading cone (3) having an outer surface which cooperates with a surface on the gland to grip the armouring of an armoured cable. The outer surface of the cone (3) decreases in diameter from the central region of the cone towards each end thereof. Preferably the outer surface of the cone (3) will take the shape of two truncated conical surfaces (4), the surfaces (4) being axially convergent in a direction away from the central region of the cone. The cone (3) will form a kink in the end of armouring gripped by the gland in use.

FIG.1

- 1 -

"CABLE GLAND"

This invention relates to cable glands, and more particularly to armoured cable glands having an armour clamp comprising an armour spreading cone which co-operates with a surface on an outer tubular portion of the gland to grip the armouring of an armoured cable.

Cable glands of the aforementioned type are used inter alia for connecting the armour portion of an armoured cable to a connection box or the like. In cables experiencing a high tensile load, it has been known for the armour to slip free from the gland, and accordingly for the cable to be wrenched away from the connection box.

It is an object of this invention to provide a cable gland wherein the engagement of the gland with a cable armour is improved.

According to the invention there is provided an armoured cable gland characterised by comprising a tubular body, one end of which is mountable on a support, the other end of the body being threaded to receive a cooperantly threaded annular stop member, and an annular armour spreading cone held within the body by the stop member, the outer surface of the armour spreading cone decreasing in diameter from the central region thereof towards each end thereof, and the inner wall of the tubular body and the stop member having co-operantly shaped surfaces in order to clamp armouring of an armoured cable against the outer surface of the cone in use.

The armour spreading cone may be formed with the radially outer surface thereof being defined by two truncated conical surfaces, each being axially convergent in a direction away from the central region of the cone. The body and the stop member may include co-operantly tapered surfaces.

The stop member may be externally threaded and screw into

- 3 -

0144146

internal threads formed within the body.

Means for mounting the gland to a support will preferably be a loose externally threaded tubular member which screws into the end of the body and has a nut associated therewith for securing the gland to the support. Alternatively the means may comprise an externally threaded collar formed integrally with the body and having a nut associated therewith.

An embodiment of the invention is described below by way of example with reference to the accompanying drawings, in which:

Figure 1    shows a part sectional side elevation of a cable gland according to the invention,

Figure 2    shows a side elevation of a length of armoured cable, the end of which is partially stripped to reveal the armouring,

Figure 3    shows a side elevation of the armoured spreading cone used with the gland of Figure 1, and

Figures 4 &

5       show different embodiments of armour spreading cones.

## DETAILED DESCRIPTION OF THE DRAWINGS

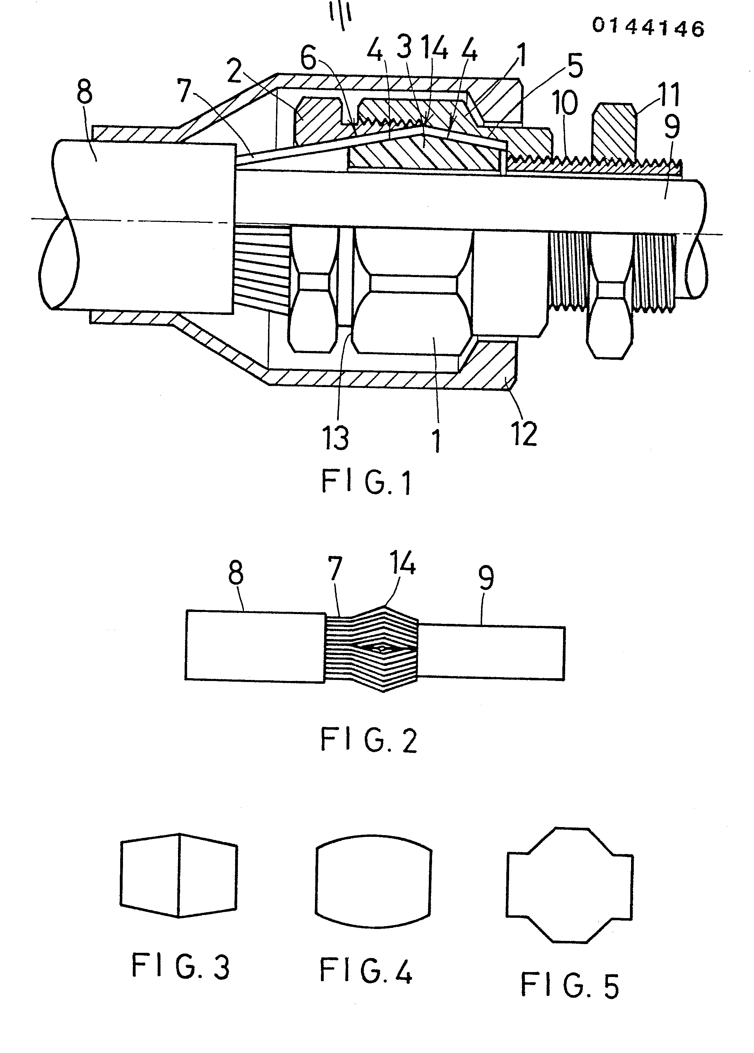

Referring initially to Figure 1, an armoured cable gland is shown comprising a substantially tubular body 1, and a stop member 2. The stop member screws into one end of the body, and prevents an armour spreading cone 3 located within the body becomming removed therefrom. The armour spreading cone has a pair of truncated conical surfaces 4 formed on the radially outer surface thereof each of which is convergent in a direction away from the central region of the cone.

The inner surface 5 of the body and the inner surface 6 of the stop member are cooperantly tapered such that a substantially constant width gap is formed between the cone and the inner walls of the gland. This gap is adapted to receive the armour 7 of an armoured cable 8 whilst the electric cable 9 or the like protected by the armour will pass through the axial bore in the gland.

The other end of the body has an externally threaded tubular member 10 screwed into it. The tubular member 10 has a nut 10 screwed onto the external threads and is adapted to be used to secure the gland to the wall of a connection box or other support. Alternatively this externally threaded collar may be formed integrally with the tubular body.

The external surfaces of the body and stop member have hexagonal flats formed thereon as shown at numeral 11, which allow the stop member and body to be gripped by suitable spanner.

The cable gland is shown having a elastomeric shroud 12 covering the major portion thereof which shroud will serve to protect the gland and the connection.

The tapered surfaces 5 and 6 on the inner walls of the tubular body and the stop member respectively, cooperate together with the tapered surfaces 4 on the armour spreading cone to grip between them the armouring 7 of an armoured cable.

0144146

After the armouring has been fully inserted into the gap between the tubular body and the cone the stop member 2 will be screwed up tight towards the end face 13 of the body 1 and this will serve to clamp the armouring in position. As the armouring is clamped in position it will be bent to follow the profile of the outer surface of the armour spreading cone. Thus a kink 14 will be formed in the armouring.

The shape of the armouring after it has been kinked is most clearly shown in Figure 2. It will be appreciated that in order to pull the armouring out of the cable gland the kink will have to be drawn through the armouring to the end of the armouring. Clearly, where high strength metal strand armouring is used, the tensile forces which will have to be applied to the armouring to draw the kink through the armouring will have to be very high indeed. It is thus envisaged that, for all practical purposes, the possibility of the armouring being pulled out of the gland will be non existant.

Other shapes of armour spreading cone are envisaged. The cone which will be used in the gland of Figure 1 is shown in Figure 3. Figures 4 and 5 show different shapes of armour spreading cone, each of which has a central region having a larger diameter than each end region. The cone of Figure 4 has an arcuate outer shape whilst that of Figure 5 has a stepped outer shape.

There may be many variations to the abovedescribed embodiment without departing from the scope of the invention as defined in the appended claims. The overall configuration of the gland may vary and, as previously mentioned the shape of the cone may be varied as well.

CLAIMS:

1.    An armoured cable gland characterised by comprising a tubular body (1) one end of which is mountable on a support, the other end of the body (1) being threaded to receive a cooperantly threaded annular stop member (2), and an annular armour spreading cone (3) held within the body (1) by the stop member (2), the outer surface of the armour spreading cone (3) decreasing in diameter from the central region thereof towards each end thereof, and the inner wall of the tubular body (1) and the stop member (2) having cooperantly shaped surfaces (5, 6) in order to clamp armouring (7) of an armoured cable (8) against the outer surface of the cone (3) in use.

2.    An armoured cable gland as claimed in claim 1, wherein the armour spreading cone (3) has the radially outer surface thereo defined by two truncated conical surfaces, (4) each surface (4) being axially convergent in a direction away from the central region of the cone (3).

3.    An armoured cable gland as claimed in claim 2, wherein the body (1) and stop member (2) have internal surfaces having cooperantly tapered surfaces (5,6).

4.    An armoured cable gland as claimed in claim 1, wherein the radially outer surface of the armour spreading cone (3) has a substantially arcuate shape when viewed from the side perpendicular to the axis of the cone (3).

5.    An armoured cable gland as claimed in any one of claims 1 to 4, wherein the stop member (2) is externally threaded and screws into threads formed on the inner wall of the tubular body (1).

0144146

FIG. 1

FIG. 2

FIG. 3

FIG. 4

FIG. 5